(19) Europäisches Patentamt
European Patent Office
Office européen des brevets

(11) **EP 3 242 482 A1**

(12) **EUROPEAN PATENT APPLICATION**

(43) Date of publication:
**08.11.2017 Bulletin 2017/45**

(51) Int Cl.:
**H04N 19/30** $^{(2014.01)}$     **H04N 19/117** $^{(2014.01)}$
**H04N 19/186** $^{(2014.01)}$     **H04N 19/85** $^{(2014.01)}$

(21) Application number: **17167965.7**

(22) Date of filing: **25.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.05.2016 EP 16305529**
**04.05.2016 EP 16305527**

(71) Applicant: **Thomson Licensing**
**92130 Issy-les-Moulineaux (FR)**

(72) Inventors:
• **OLIVIER, Yannick**
**35576 CESSON-SÉVIGNÉ (FR)**
• **CELLIER, François**
**92100 BOULOGNE-BILLANCOURT (FR)**
• **CHEVANCE, Christophe**
**35576 CESSON-SÉVIGNÉ (FR)**
• **TOUZE, David**
**35576 CESSON-SÉVIGNÉ (FR)**
• **FRANÇOIS, Edouard**
**35576 CESSON-SÉVIGNÉ (FR)**

(74) Representative: **Browaeys, Jean-Philippe**
**TECHNICOLOR**
**1-5, rue Jeanne d'Arc**
**92130 Issy-les-Moulineaux (FR)**

(54) **METHOD AND APPARATUS FOR ENCODING/DECODING A HIGH DYNAMIC RANGE PICTURE INTO A CODED BITSTREAM**

(57)     A method and an apparatus for coding at least one high dynamic range picture into a coded bitstream, and corresponding decoding method and apparatus are disclosed. Said encoding method comprises selecting (E1) a predetermined post-processing colour correction function $b_{p\_det}$ among a set of predetermined post-processing colour correction functions $b_p^{set}$, according to at least one parameter computed from at least said high dynamic range picture, determining (E2) a pre-processing colour correction function bo from said selected predetermined post-processing colour correction function $b_{p\_det}$, decomposing (E3) said high dynamic range picture, into a standard dynamic range picture, using said pre-processing colour correction function $b_0$, coding (E4) said standard dynamic range picture into said coded bitstream, coding (E5) at least one parameter for reconstructing said high dynamic range picture from said standard dynamic range picture decoded from said coded bitstream and a post-processing colour correction function $b_{p\_dec}$.

FIG.5

**Description**

**1. Technical field**

The present disclosure generally relates to picture/video encoding and decoding. Particularly, but not exclusively, the technical field of the present disclosure is related to encoding/decoding of a picture whose pixels values belong to a high-dynamic range.

**2. Background art**

In the following, a color picture contains several arrays of samples (pixel values) in a specific picture/video format which specifies all information relative to the pixel values of a picture (or a video) and all information which may be used by a display and/or any other device to visualize and/or decode a picture (or video) for example. A color picture comprises at least one component, in the shape of a first array of samples, usually a luma (or luminance) component, and at least one another component, in the shape of at least one other array of samples. Or, equivalently, the same information may also be represented by a set of arrays of color samples (color components), such as the traditional trichromatic RGB representation.

A pixel value is represented by a vector of c values, where c is the number of components. Each value of a vector is represented with a number of bits which defines a maximal dynamic range of the pixel values.

Standard-Dynamic-Range pictures (SDR pictures) are color pictures whose luminance values are represented with a limited dynamic usually measured in power of two or f-stops. SDR pictures have a dynamic around 10 fstops, i.e. a ratio 1000 between the brightest pixels and the darkest pixels in the linear domain, and are coded with a limited number of bits (most often 8 or 10 in HDTV (High Definition Television systems) and UHDTV (Ultra-High Definition Television systems) in a non-linear domain, for instance by using the ITU-R BT.709 OETF (Optico-Electrical-Transfer-Function) (*Rec. ITU-R BT.709-5, April 2002*) or ITU-R BT.2020 OETF (Rec. *ITU-R BT.2020-1, June 2014*) to reduce the dynamic. This limited non-linear representation does not allow correct rendering of small signal variations, in particular in dark and bright luminance ranges. In High-Dynamic-Range pictures (HDR pictures), the signal dynamic is much higher (up to 20 f-stops, a ratio one million between the brightest pixels and the darkest pixels) and a new non-linear representation is needed in order to maintain a high accuracy of the signal over its entire range. In HDR pictures, raw data are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A color gamut is a certain complete set of colors. The most common usage refers to a set of colors which can be accurately represented in a given circumstance, such as within a given color space or by a certain output device.

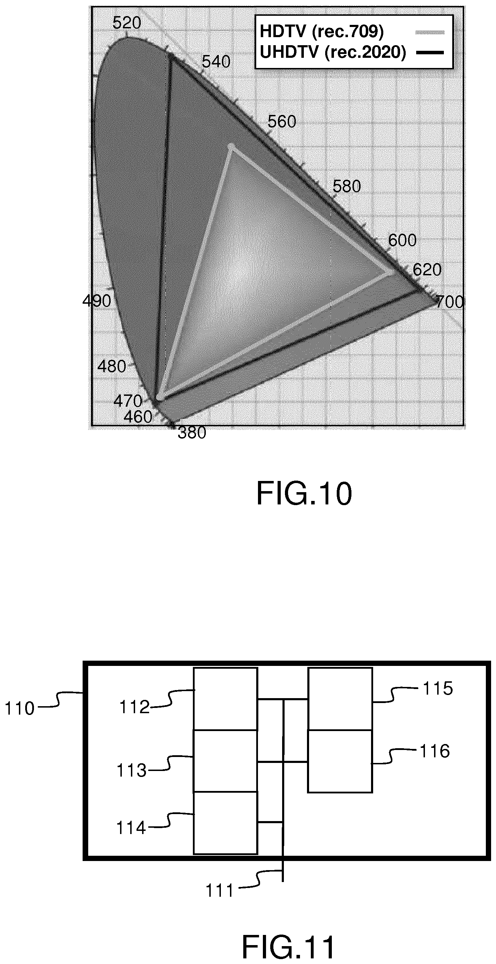

A color gamut is sometimes defined by RGB primaries and a white point provided in the CIE1931 color space chromaticity diagram, as illustrated in Fig. 10.

It is common to define primaries in the so-called CIE1931 color space chromaticity diagram. This is a two dimensional diagram (x,y) defining the colors independently on the luminance component. Any color XYZ is then projected in this diagram thanks to the transform:

$$\begin{cases} x = \dfrac{X}{X + Y + Z} \\ y = \dfrac{Y}{X + Y + Z} \end{cases}$$

The z=1-x-y component is also defined but carries no extra information.

A gamut is defined in this diagram by a triangle whose vertices are the set of (x,y) coordinates of the three primaries RGB. The white point W is another given (x,y) point belonging to the triangle, usually close to the triangle center. For example, W can be defined as the center of the triangle.

A color volume is defined by a color space and a dynamic range of the values represented in said color space.

For example, a color gamut is defined by a RGB ITU-R Recommendation BT.2020 color gamut for UHDTV. An older standard, ITU-R Recommendation BT.709, defines a smaller color gamut for HDTV. In SDR, the dynamic range is defined officially up to 100 nits (candela per square meter) for the color volume in which data are coded, although some display technologies may show brighter pixels.

High Dynamic Range pictures (HDR pictures) are color pictures whose luminance values are represented with a HDR dynamic that is higher than the dynamic of a SDR picture.

As explained extensively in *"A Review of RGB Color Spaces"* by Danny Pascale, a change of representation of a gamut, i.e. a transform that converts the three primaries and the white point from a linear color space to another, can be performed by using a 3x3 matrix in linear RGB color space. Also, a change of color space from XYZ to RGB is performed by a 3x3 matrix. As a consequence, whatever RGB or XYZ are the color spaces, a change of gamut can be performed by a 3x3 matrix. For example, a change of gamut representation from BT.2020 linear RGB to BT.709 XYZ can be performed by a 3x3 matrix.

The HDR dynamic is not yet defined by a standard but one may expect a dynamic range of up to a few thousand nits. For instance, a HDR color volume is defined by a RGB BT.2020 color space and the values represented in said RGB color space belong to a dynamic range from 0 to 4000 nits. Another example of HDR color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamuts) or versions of the picture whose at least one of their colors has been altered/enhanced according to different color grades. This may involve user interactions.

For example, in cinematographic production, a picture and a video are captured using tri-chromatic cameras into RGB color values composed of 3 components (Red, Green and Blue). The RGB color values depend on the tri-chromatic characteristics (color primaries) of the sensor. A first color-graded version of the captured picture is then obtained in order to get theatrical renders (using a specific theatrical grade). Typically, the values of the first color-graded version of the captured picture are represented according to a standardized YUV format such as BT.2020 which defines parameter values for UHDTV.

The YUV format is typically performed by applying a non-linear function, so called Optical Electronic Transfer Function (OETF) on the linear RGB components to obtain non-linear components R'G'B', and then applying a color transform (usually a 3x3 matrix) on the obtained non-linear R'G'B' components to obtain the three components YUV. The first component Y is a luminance component and the two components U,V are chrominance components.

Then, a Colorist, usually in conjunction with a Director of Photography, performs a control on the color values of the first color-graded version of the captured picture by fine-tuning/tweaking some color values in order to instill an artistic intent.

The known MPEG video coders, such as HEVC standard for example, are not compatible with HDR (High Dynamic Range) video. Furthermore, a lot of displays/terminals are not compatible with the HDR video.

In order to distribute compressed HDR video to a wide variety of displays/terminals and to make it possible to use known video coding tools, such MPEG video coding standards, an HDR video is distributed as an SDR video representative of the HDR with a more limited dynamic range and a set of parameters allowing reconstruct an HDR video from the SDR video. In such a system, the SDR video is compressed using known tools, such as the standard HEVC Main 10 profile.

On the **encoding side,** the HDR video is first decomposed into an SDR video, such a **decomposition delivering a set of parameters suitable to reconstruct** at the decoder or at display level an HDR video from the decoded SDR video. Such a set of parameters may be coded with the compressed SDR video, typically in optional syntax messages, such as SEI (Supplemental Enhancement Information) messages for the HEVC standard.

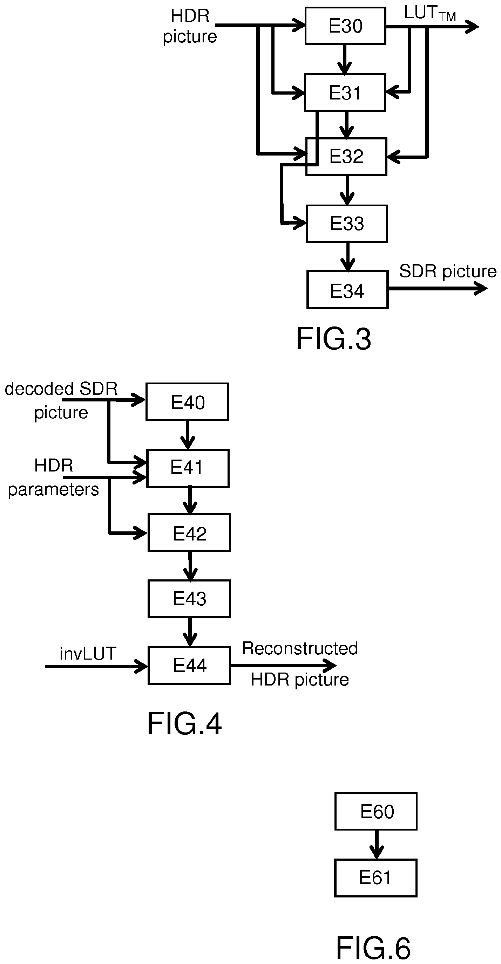

Figure 3 depicts the **HDR to SDR decomposition** of an HDR picture. The HDR-to-SDR decomposition process aims at converting an input linear-light 4:4:4 HDR picture, to an SDR compatible version (also in 4:4:4 format). Such a process uses side information such as the mastering display peak luminance, colour primaries, and the colour gamut of the container of the HDR and SDR pictures. Such side information is determined from the characteristics of the picture or of the video. The HDR-to-SDR decomposition process generates an SDR backward compatible version from the input HDR signal, using an invertible process that guarantees a high quality reconstructed HDR signal.

In a **step E30,** from the input HDR picture and its characteristics (side information), mapping variables are derived. Such a step of mapping parameters derivation delivers a luminance mapping function $LUT_{TM}$, which allows to map a linear-light luminance value of the HDR picture into an SDR-like luma value.

In a **step E31,** the luminance signal is then mapped to an SDR luma signal using the luminance mapping variables. That is for each pixel of the input HDR picture, the luminance L is derived from the HDR linear light R, G, B values of the pixel and from the luminance mapping function as: $L = A_1 \begin{bmatrix} R \\ G \\ B \end{bmatrix}$, with $A = [A_1\ A_2\ A_3]^T$ being the conventional 3x3 R'G'B'-to-Y'CbCr conversion matrix (e.g. BT.2020 or BT.709 depending on the colour space), $A_1$, $A_2$, $A_3$ being 1x3 matrices.

The linear-light luminance L is mapped to an SDR-like luma $Y_{pre0}$, using the luminance **mapping function:**

$$Y_{pre0} = LUT_{TM}(L).$$

In a **step E32,** a conversion of the R, G, B colour to derive the chroma components of the SDR signal is applied. The chroma components $U_{pre0}$, $V_{pre0}$ are built as follows:

A pseudo-gammatization using square-root (close to BT.709 OETF) is applied to the RGB values of the pixel

$$\begin{bmatrix} R_S \\ G_S \\ B_S \end{bmatrix} = \begin{bmatrix} \sqrt{R} \\ \sqrt{G} \\ \sqrt{B} \end{bmatrix}$$

Then the $U_{pre0}$ and $V_{pre0}$ values are derived as follows

$$\begin{bmatrix} U_{pre0} \\ V_{pre0} \end{bmatrix} = \begin{bmatrix} A_2 \\ A_3 \end{bmatrix} \begin{bmatrix} R_S \\ G_S \\ B_S \end{bmatrix} \times 1024$$

This step results in a gamut shifting, that is changes in colour hue and saturation compared to the input HDR signal. Such gamut shifting is corrected by a step E34 of colour gamut correction.

In **step E34,** the chroma component values are corrected as follows:

$$\begin{bmatrix} U_{pre1} \\ V_{pre1} \end{bmatrix} = \frac{1}{b_0(Y_{pre0})} \times \begin{bmatrix} U_{pre0} \\ V_{pre0} \end{bmatrix} = \frac{1024}{b_0(Y_{pre0})} \times \begin{bmatrix} A_2 \\ A_3 \end{bmatrix} \begin{bmatrix} \sqrt{R} \\ \sqrt{G} \\ \sqrt{B} \end{bmatrix}$$

where $A_2$, $A_3$ are made of the second and third lines of coefficients of the conversion matrix from R'G'B'-to-Y'CbCr, and $b_0$ is a pre-processing colour correction LUT (for Look Up Table).
Then, the mapped luma component is corrected as follows:

$Y_{pre1} = Y_{pre0} - v \times \max(0, a \times U_{pre1} + b \times V_{pre1})$, where a and b are pre-defined parameters and v is a control parameter enabling to control the saturation. The higher the value Y is, the more the picture is saturated.

The HDR picture to SDR picture decomposition results in an **output SDR picture** with pixels arrays $Y_{pre1}U_{pre1}V_{pre1}$.
The **HDR reconstruction process** is the inverse of the HDR-to-SDR decomposition process. Figure 4 illustrates such an HDR reconstruction process. A decoded SDR picture comprises 3 arrays of pixels $SDR_y$, $SDR_{cb}$, $SDR_{cr}$ corresponding respectively to the luma and chroma components of the picture. The HDR reconstruction process the following steps for each pixel of the SDR picture.
In a **step E40,** the values $U_{post1}$ and $V_{post1}$ are derived as follows for each pixel (x,y) of the SDR picture:

$$\begin{cases} U_{post1} = SDR_{cb}[x][y] - midSampleVal \\ V_{post1} = SDR_{cr}[x][y] - midSampleVal \end{cases}$$

where midSampleVal is a predefined shifting constant.
In a **step E41,** the value $Y_{post1}$ for the pixel (x,y) of the SDR picture is derived as follows:

$$Y_{post1} = SDR_y[x][y] + v \times \max(0, a \times U_{post1} + b \times V_{post1}),$$

where a and b are the same pre-defined parameters and v is a control parameter enabling to control the saturation, as in the decomposition process. Therefore, such parameters should be known to the reconstruction module. They may be part of HDR parameters coded with the compressed SDR picture are predefined at the decoder.

Such a step may possibly be followed by a clipping to avoid being out of the legacy signal range.

In a **step E42,** colour correction is performed. In step E42, $U_{post1}$ and $V_{post1}$ are modified as follows:

$$\begin{cases} U_{post1} = b_p[Y_{post1}] \times U_{post1} \\ V_{post1} = b_p[Y_{post1}] \times V_{post1} \end{cases}$$

where $b_p$ is a post-processing colour correction LUT, that depends directly on the pre-processing colour correction LUT $b_0$. The post-processing colour correction LUT $b_p$ can be determined by:

$$b_P(Y) = \frac{b_O(Y)}{K \times \sqrt{L(Y)}} \qquad \text{(eq. 1)}$$

where K is a constant value, L is the linear-light luminance derived from $L = invLUT_{TM}[Y]$, with $invLUT_{TM}$ being the inverse function of the $LUT_{TM}$, and Y the luma value of the SDR signal. In **step E43,** RGB ($HDR_R$, $HDR_G$, $HDR_B$) values of pixels are reconstructed. In step E43, a value T is derived as:

$$T = k0 \times U_{post1} \times V_{post1} + k1 \times U_{post1} \times U_{post1} + k2 \times V_{post1} \times V_{post1}$$

where $k0, k1, k2$ are predefined values depending on the SDR colour gamut. The value $S0$ is then initialized to 0, and the following applies:

- If ($T \leq 1$), $S0$ is set to $Sqrt(1 - T)$
- Else, $U_{post1}$ and $V_{post1}$ are modified as follows:

$$\begin{cases} U_{post1} = \frac{U_{post1}}{\sqrt{T}} \\ V_{post1} = \frac{V_{post1}}{\sqrt{T}} \end{cases}$$

The values $R1, G1, B1$ are derived as follows.

$$\begin{bmatrix} R1 \\ G1 \\ B1 \end{bmatrix} = M_{Y'CbCr-to-R'G'B'} \times \begin{bmatrix} S0 \\ U_{post1} \\ V_{post1} \end{bmatrix}$$

where $M_{Y'CbCr\text{-}to\text{-}R'G'B'}$ is the conventional conversion matrix from Y'CbCr to R'G'B'.

In a **step E44,** the RGB values from the HDR picture are then reconstructed from the SDR RGB values. In step E44, the values $R2,$ G2, B2 are derived from $R1, G1, B1$ as follows:

$$\begin{cases} R2 = invLUT[Y_{post1}] \times R1 \\ G2 = invLUT[Y_{post1}] \times G1 \\ B2 = invLUT[Y_{post1}] \times B1 \end{cases}$$

where invLUT corresponds to the square-root of the inverse look-up-table $LUT_{TM}$ derived from the luma mapping parameters transmitted to the reconstruction module.

And the output samples $HDR_R$, $HDR_G$, $HDR_B$ are derived from $R2,$ G2, B2 as follows:

$$\begin{cases} HDR_R = R2^2 \\ HDR_G = G2^2 \\ HDR_B = B2^2 \end{cases}$$

A clipping may be applied to limit the range of the output HDR signal.

The process for deriving the LUT $b_0$ is independent from the content. It applies in the container colour gamut and takes into account the content colour gamut. In order to better control the HDR to SDR decomposition and thus the quality of the resulting SDR picture, the computation of the LUT $b_0$ is performed so as to control the color saturation of the derived SDR signal.

For computing the LUT $b_0$, for each luma value Y, the following steps are applied. The luminance L is generated using the inverse function of $LUT_{TM}$: $L = invLUT[Y]$. Then the best $b_0[Y]$ for luminance $L$ (and therefore for luma $Y$) is identified as follows. Values $b_{test}$ in a given pre-defined range are evaluated. For this, a cumulative error err associated to $b_{test}$ is computed as follows:

- *err* is initialized to 0.
- the RGB cube is scanned, and each *RGB* sample is modified to reach a luminance of 1 cd/m$^2$. Then, the modified RGB samples RGB$_{SDR}$ are scaled by the luminance L as follows, for deriving HDR-like RGB samples RGB$_{HDR}$:

$$\begin{cases} R_{HDR} = L \times R_{SDR} \\ G_{HDR} = L \times G_{SDR} \\ B_{HDR} = L \times B_{SDR} \end{cases}$$

The output sample $YUV_{SDR}$ as described in the HDR-to-SDR decomposition process is built, with $b_0 = b_{test}$ from the scaled RGB$_{HDR}$ samples. Then, an error in the Lab color space, $error_{ab}$, between $RGB'_{sdr}$ samples values reconstructed from the output sample $YUV_{SDR}$ and RGB$_{HDR}$ is computed. And *err* is updated as follows:

$$err = err + error_{ab}$$

The final value $b_0[Y]$ corresponds to $b_{test}$ giving the lowest cumulated err value among all the tested $b_{test}$ values.

It can be seen that such a computation of the pre-processing colour correction $b_0$, and thus the post-processing colour correction $b_p$, is complex and is time and resource consuming.

There is thus a need for a new method and apparatus for encoding at least one high dynamic range picture into a coded bitstream with lower complexity, and for a correspondingly decoding method and apparatus.

### 3. Summary

According to an aspect of the present principle, a method for coding at least one high dynamic range picture into a coded bitstream is disclosed. Such a method comprises:

- a step of selecting a predetermined post-processing colour correction function b$_{p\_det}$ among a set of predetermined post-processing colour correction functions b$_p^{set}$, according to at least one parameter computed from at least said high dynamic range picture,
- a step of determining a pre-processing colour correction function b$_0$ from said selected predetermined post-processing colour correction function b$_{p\_det}$,
- a step of decomposing said high dynamic range picture, into a standard dynamic range picture, using said pre-processing colour correction function b$_0$,
- a step of coding said standard dynamic range picture into said coded bitstream,
- a step of coding at least one parameter for reconstructing said high dynamic range picture from said standard dynamic range picture decoded from said coded bitstream and a post-processing colour correction function b$_{p\_dec}$.

Preferably, said at least one parameter computed from said at least one high dynamic range picture is a saturation skew parameter.

According to this principle, the computation of the pre-processing colour correction function b$_0$ is simplified. On

the encoder side, a set of pre-computed post-processing colour correction function is defined according for example to different characteristics of the HDR content. Then, a specific post-processing colour correction function is selected from this set for each HDR picture of the video according to a predetemined criterion. Then, the pre-processing colour correction function $b_0$ is further computed from the post-processing colour correction function. Complexity is thus reduced on the encoder side.

According to another embodiment, said encoding method further comprises:

- a step of selecting a predetermined post-processing colour correction function $b_{p\_default}$ known to a decoder,
- a step of determining an adjustment function $f_{adj}$ used to adjust said predetermined colour correction function $b_{p\_default}$, delivering an adjusted colour correction function $b_{adj}$, said adjustment function F being determined by taking into account said selected predetermined post-processing colour correction function $b_{p\_default}$ and said predetermined post-processing colour correction function $b_{p\_det}$,
- said parameter for reconstructing said high dynamic range picture from said standard dynamic range picture being a set of pivot points representative of said adjustment function $f_{adj}$, and said post-processing colour correction function $b_{p\_dec}$ being said adjusted post-processing colour correction function $b_{adj}$.

According to this embodiment, it is not needed at the decoder to know the predetermined post-processing colour correction function $b_{p\_det}$. A set of pivot points representative of an adjustment function $f_{adj}$ is coded into the coded bitstream. Such pivot points makes it possible to reconstruct at the decoder a high dynamic range picture from the coded standard dynamic range picture and predefined post-processing colour correction function $b_{p\_default}$ which are known to the decoder. As an example, such predefined post-processing colour correction function $b_{p\_default}$ could be post-processing colour correction function that are sent to the decoder for the whole sequence or that are already defined in a compression standard.

According to another embodiment, said parameter for reconstructing said high dynamic range picture from said standard dynamic range picture is an index representative of the selected predetermined post-processing colour correction function $b_{p\_det}$, and said post-processing colour correction function $b_p$ corresponds to said selected predetermined post-processing colour correction function $b_{p\_det}$.

According to this embodiment, the set of predetermined post-processing colour correction functions $b_p^{set}$ from which $b_{p\_det}$ has been selected is known to the decoder. As an example, such a set may be predefined at the decoder. Such an embodiment makes it possible to reduce the decoder complexity since it is not necessary to adjust a predetermined post-processing colour correction function $b_{p\_default}$. Furthermore, the encoder complexity is further reduced since the adjustment function do not need to be computed at encoder side.

According to a variant, said method further comprises a step of coding into said coded bitstream a set of parameters representative of said set of predetermined post-processing colour correction functions $b_p^{set}$.

According to this embodiment, the set of post-processing colour correction function $b_p^{set}$, is coded into the coded bitstream at a sequence level or a group of pictures level for example. For example, such a set of post-processing colour function may be transmitted to the decoder after a cut detection or at Random Access point. This embodiment allows to adapt the set of post-processing colour correction function $b_p^{set}$ according to the characteristics of the video sequence.

A method for decoding at least one high dynamic range picture from a coded bitstream is also disclosed. Said decoding method comprises:

- a step of decoding a standard dynamic range picture from said coded bitstream,
- a step of decoding an index representative of a predetermined post-processing colour correction function $b_{p\_det}$ among a set of predetermined post-processing colour correction functions $b_p^{set}$,
- a step of reconstructing said high dynamic range picture from said decoded standard dynamic range picture and said predetermined post-processing colour correction function $b_{p\_det}$.

According to one embodiment, said decoding method further comprises a step of decoding from said coded bitstream a set of parameters representative of said set of predetermined post-processing colour correction functions $b_p^{set}$.

Another aspect of the disclosure is an apparatus for coding at least one high dynamic range picture into a coded bitstream. Such a coding apparatus comprises:

- means for selecting a predetermined post-processing colour correction function $b_{p\_det}$ among a set of predetermined post-processing colour correction functions $b_p^{set}$, according to at least one parameter computed from at least said high dynamic range picture,
- means for determining a pre-processing colour correction function $b_0$ from said selected predetermined post-processing colour correction function $b_{p\_det}$,

- means for decomposing said high dynamic range picture, into a standard dynamic range picture, using said pre-processing colour correction function $b_0$,
- means for coding said standard dynamic range picture into said coded bitstream,
- means for coding at least one parameter for reconstructing said high dynamic range picture from said standard dynamic range picture decoded from said coded bitstream and a post-processing colour correction function $b_{p\_dec}$.

Preferably, said at least one parameter computed from said at least one high dynamic range picture is a saturation skew parameter.

Another aspect of the disclosure is an apparatus for decoding at least one high dynamic range picture from a coded bitstream.

According to one embodiment, such a decoding apparatus comprises:

- means for decoding a standard dynamic range picture from said coded bitstream,
- means for decoding an index representative of a predetermined post-processing colour correction function $b_{p\_det}$ among a set of predetermined post-processing colour correction functions $b_p^{set}$,
- means for reconstructing said high dynamic range picture from said decoded standard dynamic range picture and said predetermined post-processing colour correction function $b_{p\_det}$.

According to another embodiment, such a decoding apparatus further comprises means for decoding from said coded bitstream a set of parameters representative of said set of predetermined post-processing colour correction functions $b_p^{set}$.

Another aspect of the disclosure is a computer program comprising software code instructions for performing any one of the embodiments described in the present disclosure, when the computer program is executed by a processor.

Another aspect of the disclosure is a bitstream representative of at least one coded high dynamic range picture comprising:

- coded data representative of at least one standard dynamic range picture obtained from said high dynamic range picture,
- coded data representative of an index representative of a predetermined post-processing colour correction function $b_{p\_det}$ among a set of predetermined post-processing colour correction functions $b_p^{set}$, said predetermined post-processing colour correction function $b_{p\_det}$ being used for reconstructing said high dynamic range picture from said standard dynamic range picture decoded from said bitstream.

According to one embodiment, such a bitstream further comprises coded data representative of said set of parameters representative of said set of predetermined post-processing colour correction functions $b_p^{set}$.

A non-transitory processor readable medium having stored thereon a bitstream is disclosed wherein the bitstream comprises:

- coded data representative of at least one standard dynamic range picture obtained from said high dynamic range picture,
- coded data representative of an index representative of a predetermined post-processing colour correction function $b_{p\_det}$ among a set of predetermined post-processing colour correction functions $b_p^{set}$, said predetermined post-processing colour correction function $b_{p\_det}$ being used for reconstructing said high dynamic range picture from said standard dynamic range picture decoded from said bitstream.

## 4. Brief description of the drawings

Figure 1 illustrates an exemplary system for encoding an HDR picture into a coded bitstream according to an embodiment of the present principle.
Figure 2 illustrates an exemplary system for decoding an HDR picture into a coded bitstream according to an embodiment of the present principle.
Figure 3 illustrates a block diagram of an exemplary method for decomposing an HDR picture into an SDR picture.
Figure 4 illustrates a block diagram of an exemplary method for reconstructing an HDR picture from an SDR picture decoded from a coded bitstream.
Figure 5 illustrates a block diagram of an exemplary method for coding an HDR picture into a coded bitstream according to an embodiment of the present principle.

Figure 6 illustrates a block diagram of an exemplary method for computing a set of post-processing colour function, according to an embodiment of the present principle.

Figure 7 illustrates a block diagram of an exemplary method for coding an HDR picture into a coded bitstream according to another embodiment of the present principle.

Figure 8 illustrates a block diagram of an exemplary method for decoding an HDR picture from a coded bitstream according to an embodiment of the present principle.

Figure 9 illustrates a block diagram of an exemplary method for decoding an HDR picture from a coded bitstream according to another embodiment of the present principle.

Figure 10 shows examples of chromaticity diagrams.

Figure 11 illustrates an exemplary apparatus for implementing one of the methods disclosed herein according to an embodiment of the present principle.

Figure 12 illustrates an embodiment of a method for computing the pre-processing colour correction function b0[k] are obtained from at least one saturation skew parameter satskew computed from at least one high dynamic range picture.

Figure 13 illustrates an embodiment of the method for computing a satskew value for a HDR picture.

## 5. Description of embodiments

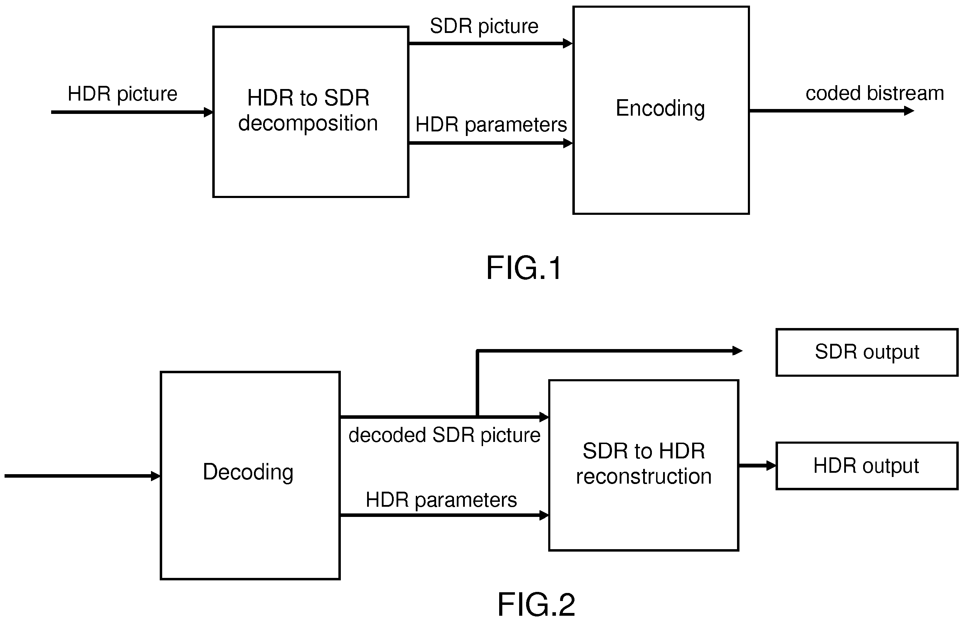

Figure 1 illustrates an exemplary system for encoding an HDR picture into a coded bitstream according to an embodiment of the present principle. Such an encoding system may be used for distributing a compressed HDR video while at the same time distributing an associated SDR video representative of the HDR video with a more limited dynamic range. Such an encoding system provides a solution for SDR backward compatible HDR distribution.

The disclosure is described for encoding/decoding a color HDR picture but extends to the encoding/decoding of a sequence of pictures (video) because each color picture of the sequence is sequentially encoded/decoded as described below.

An HDR picture is first input to a module of HDR to SDR decomposition. Such a module performs HDR to SDR decomposition and outputs an SDR picture which is a dynamic reduced version of the input HDR picture.

The output SDR picture is a reshaped version of the input HDR picture such that the hue and perceived saturation are preserved and the visual quality of the SDR picture relative to the HDR picture is increased. The HDR to SDR decomposition module also outputs a set of HDR parameters which are further used for HDR picture reconstruction.

Such a set of HDR parameters comprises at least luma mapping parameters allowing to derive an inverse luma mapping table for converting SDR luma to HDR luminance,

The SDR picture is then input to an encoding module performing picture encoding. Such an encoding module may be for example an HEVC Main 10 coder suitable for encoding video and picture represented on a 10 bit-depth. The encoding module outputs a coded bitstream representative of a compressed version of SDR picture. The HDR parameters are also encoded by the encoding module as part of the coded bitstream. As an example, such HDR parameters may be coded in SEI message (Supplemental Enhancement Information message) of an HEVC Main 10 bitstream.

Such a coded bitstream may then be stored or transmitted over a transmission medium.

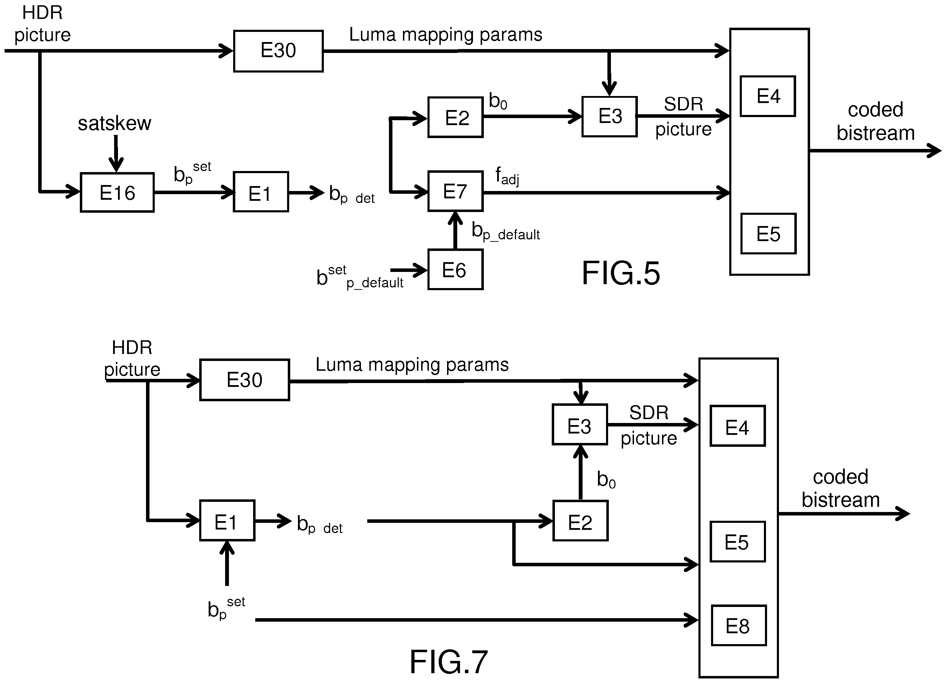

The method steps of the encoding system presented here are further describes according to various embodiments disclosed herein with figures 5 and 7.

Figure 2 illustrates an exemplary system for decoding an HDR picture from a coded bitstream according to an embodiment of the present principle. As an example, the coded bitstream is conformed to the HEVC Main 10 profile.

Such a coded bitstream comprises coded data representative of an SDR picture and coded data representative of HDR parameters suitable for reconstructing an HDR picture from a decoded version of the SDR picture compressed in the coded bitstream.

Such a coded bitstream may be stored in a memory or received from a transmission medium.

The coded bitstream is first input to a decoding module performing picture decoding and HDR parameters decoding. The decoding module may be for example a decoder conformed to an HEVC Main 10 profile decoder.

The decoding module outputs a decoded SDR picture and a set of HDR parameters. The decoded SDR picture may be displayed by a legacy SDR display (SDR output). Such an SDR picture may be viewable by an end-user from his legacy SDR display. Thus, the disclosed system is backward compatible with any SDR legacy display.

The decoded SDR picture and HDR parameters are then input to a module for SDR to HDR reconstruction. Such a module reconstructs the HDR picture from the decoded SDR picture using the given HDR parameters. Then, a decoded HDR picture is output and can be displayed by an HDR compatible display (HDR output).

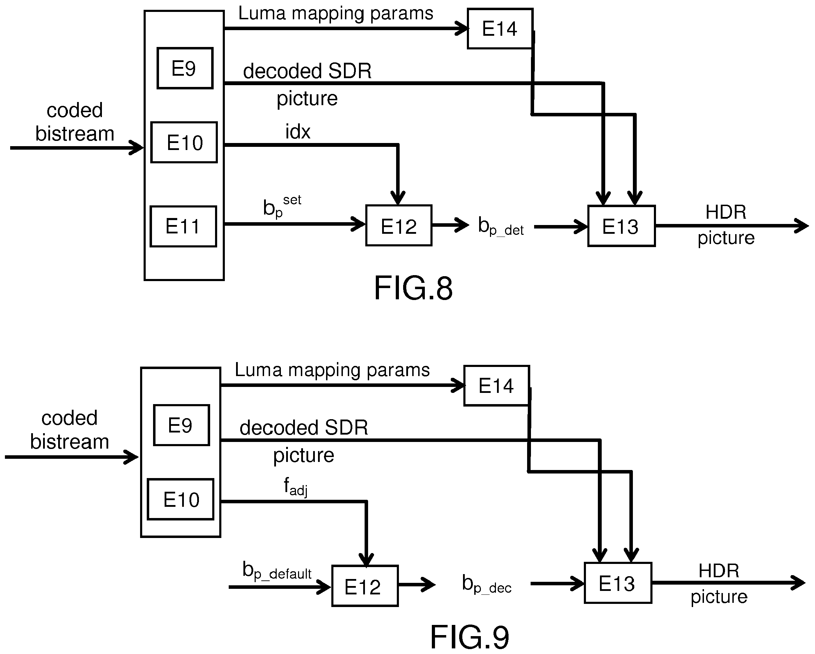

The method steps of the **decoding system** presented here are further describes according to various embodiments disclosed herein with figures 8 and 9.

**1 - Coding an HDR picture into a coded bitstream:**

**Figure 5** illustrates a block diagram of an exemplary method for **coding an HDR picture** into a coded bitstream according to an embodiment of the present principle.

In step E30, luma mapping parameters are first computed according to step E30 already described with figure 3. Luma mapping parameters allows to derive the LUT for converting linear light luminance of the HDR picture into luma samples of the SDR picture and to derive an inverse LUT for converting the luma samples of a decoded SDR picture into luminance of a reconstructed HDR picture.

In an optional step E16, a set of predetermined post-processing colour correction functions $b_p^{set}$ is obtained from at least one saturation skew parameter computed from at least said high dynamic range picture.

According to an embodiment of the step E16, the set of predetermined post-processing colour correction functions $b_p^{set}$ is obtained from a saturation skew parameter called satskew computed from a high dynamic range picture according to, for example, the method described in relation with figure 6.

If one satskew value is associated to each predetermined post-processing colour correction functions $b_p^{set}$, the derivation of the satskew value from the high dynamic range picture to identify the post-processing colour correction function can be replaced by the direct identification of an index i which identifies the corresponding ith post-processing colour correction function. According to an embodiment of the step E16, the set of predetermined post-processing colour correction functions $b_p^{set}$ is obtained from an index.

In a **step E1,** a first predetermined post-processing colour correction function $b_{p\_det}$ is **selected** among a first set of predetermined post-processing colour correction functions $b_p^{set}$, according to at least one parameter $p_{HDR}$ computed from at least said high dynamic range picture, for instance the saturation skew parameter used in step E16.

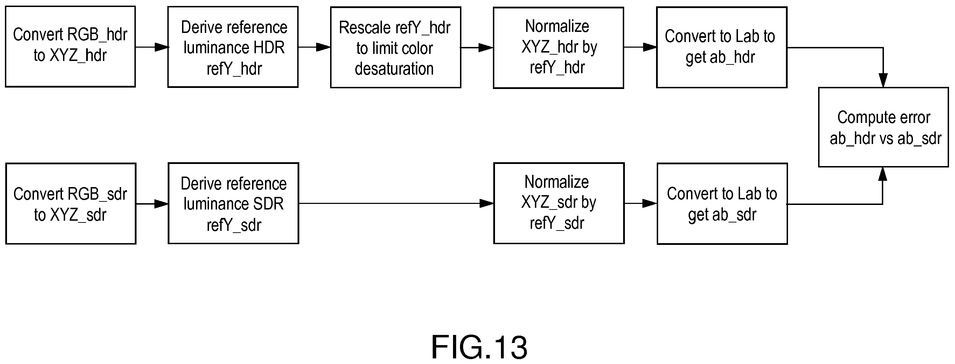

More generally, the set of predetermined post-processing colour correction functions $b_p^{set}$ comprises pre-computed post-processing correction function $b_p(k)$, with k=0 to Nk, where Nk is the number of post-processing colour correction functions of the first set $b_p^{set}$. Each pre-computed post-processing correction function $b_p(k)$ corresponds to given characteristics of HDR content, such as color saturation or hue for example, or corresponds to a value of the parameter satskew. Equivalently, an index, actually related to the satskew value, can be derived to identify the predetermined post-processing colour correction function $b_{p\_det}$. According to an embodiment, the satskew parameter is computed for at least the HDR picture according to the method described in relation with figure 13.

Each post-processing colour correction function $b_p(k)$ of the set $b_p^{set}$ is thus associated with a parameter p(k) representative of a color rendering of an SDR picture obtained using the post-processing colour correction function $b_p(k)$. Such a representative parameter p(k) could be representative of the hue or saturation level of the picture as an example.

According to an embodiment of the present principle, at least one parameter $p_{HDR}$ is extracted from the HDR picture to code, such as the hue or color saturation level. Such parameters are obtained from an analysis of the HDR picture and are used to select a post-processing colour correction function $b_{p\_det}$ among the first post-processing colour correction function set $b_p^{set}$ using the corresponding representative parameter p(k) which has been associated with the post-processing colour correction functions $b_p(k)$ of the set $b_p^{set}$.

In a **step E2,** a pre-processing colour correction function $b_0$ is determined in a manner known per se (see step E42 above) from the selected post-processing colour correction function $b_{p\_det}$ such that, when applied to the luminance component of the HDR picture, luminance of a SDR picture is obtained. The pre-processing colour correction and post-processing colour correction function are for instance directly linked by equation eq.1 discussed above. The pre-processing colour correction function $b_0$ is thus determined as follows for each Y values:

$$b_0(Y) = b_{p\_det}(Y) \times K \times \sqrt{L(Y)},$$

where K is a constant value, L is the linear-light luminance derived from $L = invLUT[Y]$, with invLUT being the inverse function of the $LUT_{TM}$.

In a **step E3,** the HDR picture is decomposed into an SDR picture, using the pre-processing colour correction function $b_0$ determined as in step E2 and the luma mapping parameters obtained in step E30. Such a decomposition process is performed in a similar manner as described in relation with figure 3.

In a **step E4,** the SDR picture is then coded into a coded bitstream. Any picture or video coding method may be used. For example, an HEVC Main 10 profile encoder may be used.

The luma mapping params are also coded into the coded bitstream so as to make it possible to derive the inverse LUT mapping luminance.

In a **step E5,** at least one parameter for reconstructing said HDR picture from a decoded version of said SDR picture and from a post-processing colour correction function $b_{p\_dec}$ is coded into said coded bitstream.

According to an embodiment, such at least one parameter corresponds to a set of pivot points representative of a piecewise linear adjustment function $f_{adj}$ used on the decoding side, to adjust as described below a default post-processing colour correction function $b_{p\_default}$ to the post-processing colour correction function $b_{p\_det}$ determined at step E1. As this function is piecewise linear, each linear segment between any two neighbored pivot points can be determined such as to define this adjustment function.

In a **step E6,** a second predetermined post-processing colour correction function $b_{p\_default}$ is **selected** among a second set of predetermined post-processing colour correction function $b^{set}_{p\_default}$. The second set $b^{set}_{p\_default}$ comprises pre-defined default LUTs $b_{P\_default}[k]$, k=1 to N, which are predefined on the decoder side. For instance, one LUT is defined for each triple (container colour gamut, content colour gamut, peak luminance). In step E6, $b_{p\_default}$ is selected from this second set according to the HDR picture characterictics (container colour gamut, content colour gamut, peak luminance). Such characteristics are part of the picture parameters and are sent to the decoder into the coded bitstream. On the decoder side, it is thus possible to select the corresponding post-processing colour correction function $b_{p\_default}$.

At a **step E7,** an adjustment function $f_{adj}$ is determined. Said adjustment function $f_{adj}$ is determined by taking into account said selected predetermined post-processing colour correction function $b_{p\_default}$ and said predetermined post-processing colour correction function $b_{p\_det}$ selected at step E1. The adjustment function $f_{adj}$ is built to **map** as much as possible the function $b_{P\_default}$ to the selected function $b_{p\_det}$ by minimizing the difference between $b_{p\_det}$ and $b_{p\_dec}$ where $b_{p\_dec}$ is set as:

$$b_{p\_dec}[Y] = f_{adj}[Y] \times b_{p\_default}[Y] \qquad (eq.2)$$

The adjustment function $f_{adj}$ is built so that $b_{p\_dec}$ is as close as possible to $b_{p\_det}$ for all Y values. In the present embodiment, $f_{adj}$ is built by minimization of an error based on equation eq.2, however any types of relationship may be used.

Then, the $f_{adj}$ function is coded in step E5 and transmitted to the decoder side. The function $f_{adj}$ is modeled using pivot points of a piece-wise linear model. In step E5, only the set of pivot points representative of the $f_{adj}$ function are coded. Each x and y components of such pivot points are coded into the coded bitstream, for example as part of the HDR parameters as described in figure 1.

According to a variant, the set of predetermined post-processing colour correction functions $b_p^{set}$ comprises a single pre-computed post-processing correction function $b_p$.

According to a variant, the set of predetermined post-processing colour correction functions $b_p^{set}$ is obtained for each high dynamic range picture of a video sequence.

Figure 7 illustrates a block diagram of another exemplary method for coding an HDR picture into a coded bitstream according to another embodiment of the present principle.

In this embodiment, steps E30, E1, E2, E3 and E4 are performed similarly as in the embodiment described with figure 5.

According to the embodiment described with figure 7, the third post-processing colour correction function $b_{p\_dec}$ used at the decoder to recontruct the HDR picture is obtained from the same first set of pre-computed post-processing colour correction function $b_p^{set}$. Therefore, there is no need to compute an adjustment function as in the previous described embodiment.

According to the present embodiment, in **step E5**, an index idx is coded into the coded bitstream, for example using a fixed length code. Said index idx is representative of the first predetermined post-processing colour correction function $b_{p\_det}$ selected from the first set $b_p^{set}$. In this embodiment, such a first set $b_p^{set}$ should be **known** at the decoder. For instance, the first set of post-processing colour correction functions is predefined at the decoder.

Alternatively, in a step E8, such a first set $b_p^{set}$ of post-processing colour correction functions is coded into the coded bitstream and transmitted to the decoder. For example, this first set $b_p^{set}$ is coded at a sequence level with the video sequence parameters and **stored** by the decoder during all the decoding process of the pictures of the video. Each post-processing colour correction function $b_p(k)$ of the first set $b_p^{set}$ is coded as a one dimension array comprising a number of NbY elements, where NbY represents the number of luma values Y of the SDR picture.

According to a preferred variant of this embodiment, the corresponding representative parameter p(k) associated with a post-processing colour correction function $b_p(k)$ is also coded into the coded bitstream. According to this variant, the selected first post-processing colour correction $b_{p\_det}$ could be determined at the decoder using a corresponding parameter $p_{HDR}$ which could be sent to the decoder. As an example, such parameter $p_{HDR}$ is coded into the coded bitstream with information at a picture parameter level.

Each function of the set $b_p^{set}$ is coded as a one dimension array comprising a number of N elements, where N represents the number of luma values Y of the SDR picture.

Figure 6 illustrates a block diagram of an exemplary method for computing a set of post-processing colour function $b_p^{set}$, according to an embodiment of the present principle.

According to a **first variant,** before encoding pictures of a video sequence, Nk post-processing colour correction

LUT $b_p(k)$ are pre-computed. Each post-processing colour correction LUT $b_p(k)$ is associated with a parameter p(k) representative of a color rendering of an SDR picture (e.g hue or saturation level) derived using such post-processing colour correction LUT $b_p(k)$. These post-processing colour correction LUTs $b_p(k)$ are computed using a learning process from a large set of representative HDR pictures.

In a step E60, for each HDR picture of this set, a default post-processing colour correction $b_p^{def}$ LUT is used to generate a default SDR picture. The SDR picture is generated according to the decomposition process described according to figure 3, using a pre-processing colour correction function $b_0^{def}$ computed from the default post-processing colour correction $b_p^{def}$ LUT. The pre-processing colour correction function $b_0^{def}$ computed from the default post-processing colour correction $b_p^{def}$ LUT is obtained for each luma value Y, by:

$$b_0{}_p^{def}(Y) = b_p^{def}(Y) \times K \times \sqrt{L(Y)} ,$$ where K is a constant value, L is the linear-light luminance derived from

$L = invLUT_{TM}[Y]$, with $invLUT_{TM}$ being the suqare-root of the inverse function of the $LUT_{TM}$.

Starting from this default SDR picture, a colorist modifies this default post-processing colour correction LUT $b_p^{def}$ for optimizing the color rendering of the SDR picture (hue or/and saturation). The resulting post-processing colour correction LUT $b_p^{res}$ is associated with the HDR input picture.

In a step E61, a classification algorithm gathers the HDR pictures presenting common characteristics in a subset. For each subset of HDR pictures, an average of the LUTs $b_p^{res}$ associated with the HDR pictures of the subset is computed to obtain one representative post-processing colour correction LUT $b_p(k)$ per subset. The classification algorithm resulted in a number of Nk subsets, each subset k being associated with a representative post-processing colour correction LUT $b_p(k)$.

In a step E62, for each subset k, at least one parameter p(k) is extracted from the HDR pictures of the subset, such as saturation level or hue. Such an extracted parameter is representative of the subset. This parameter allows to distinguish the subsets.

In the coding method described according to one embodiment, in reference to figure 5 or 7, such a parameter p(k) enables to identify a correct post-processing colour correction LUT $b_p(k)$ to get the optimal color rendering for a target HDR picture. For instance, after a pre-analysis of hue and saturation histograms of a target HDR picture, a corresponding parameter $p_{HDR}$ can be derived from an average of the HDR saturation of the HDR picture.

At the end of the post-processing colour correction LUT computation method described above, the set of post-processing colour function $b_p^{set}$ comprises the Nk post-processing colour correction function computed at step E61.

Then, the computed set of post-processing colour function $b_p^{set}$ and the corresponding representative parameter of each subset associated with a post-processing colour correction function $b_p(k)$ are input to step E1 **for selecting** a post-processing colour correction function $b_{p\_det}$ as disclosed in figures 5 or 7.

According to **a second variant,** before encoding pictures of a video sequence, K post-processing colour correction LUT $b_p$ are pre-computed for the whole sequence. For example, K is equal to 3.

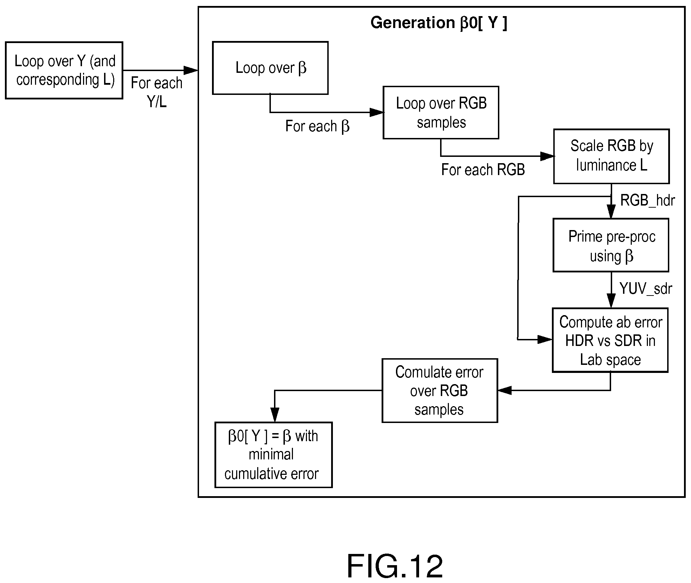

In a step E60, a pre-processing LUT bo[k] (k going from 0 to K), are first computed according, for example, to the method described in relation with figure 12. These pre-processing LUT bo[k], are computed using the error$_{ab}$ minimization for one pre-processing colour correction function computed for a current picture. The pre-processing LUT $b_0[k]$ may be computed for each picture or once for all the pictures of a video sequence. Therefore, it is not necessary to compute a pre-processing colour correction function for each picture of the sequence as in the prior art.

In the present embodiment, each pre-processing LUT $b_0[k]$ is computed for different saturation skew values. For instance, in the case where K is equal to 3, the following saturation skew values are used:

- $b_0[0]$ is computed for a saturation skew equals to 5,
- $b_0[1]$ is computed for a saturation skew equals to 10,
- $b_0[2]$ is computed for a saturation skew equals to 15.

As these pre-processing LUT are computed for all the pictures of a video sequence, in the present embodiment, the minimization is done with a large number of Tone Mapping parameters. This allows to optimize the accuracy of the computed LUT compared to the minimization described above in which one Tone Mapping parameters (the one of the current picture) was used.

In a variant, the LUT may be computed off-line (no real time limitation). Then the minimization can be done with full precision that alos optimizes the accuracy of the LUT.

In a step E61, for each k from 0 to K-1, the post-processing colour correction function $b_p[k]$ are derived from the pre-processing colour correction function bo[k] computed at step E60, using equation (3) disclosed above:

$$b_P[k](Y) = \frac{b_O[k](Y)}{K \times \sqrt{L(Y)}}$$

The set of post-processing colour function $b_p{}^{set}$ comprises the K post-processing colour correction function computed at step E61.

Then, the computed set of post-processing colour function $b_p{}^{set}$ is input to step E1 for selecting a post-processing colour correction function $b_{p\_det}$ as described in relation with figures 5 or 7.

Figure 12 illustrates an embodiment of a method for computing the pre-processing colour correction function bo[k] is obtained from at least one saturation skew parameter satskew computed from a high dynamic range picture.

According to this embodiment, the pre-processing colour correction function $b_0[k]$ are obtained from a minimization of an error value $error_{ab}$ (expressed in Lab color space), between $RGB_{sdr}$ and $RGB_{hdr}$.

The process is independent from the content. It applies in the container colour gamut and takes into account the content colour gamut. In order to better control the HDR to SDR decomposition and thus the quality of the resulting SDR picture, the computation of a pre-processing colour correction function bo[k] is controlled by a satskew parameter (saturation skew parameter). Thus, the color saturation of the derived SDR signal can be controlled.

For computing the pre-processing colour correction function $b_0[k]$, for each luma value Y of a HDR picture, the following steps are applied:

In a step 130, the luminance L is generated using the inverse function of $LUT_{TM}$: $L = invLUT[Y]$.

In step 140, the best $\beta_0[Y]$ for luminance L (and therefore for luma Y) is identified as follows: For each luma value Y,

    1) For each potential value $\beta_{test}$ belonging a given pre-defined range,

        1.1) A cumulative error value $err_{test}$=0;
        1.2) For each RGB sample:

            1.2.1) the RGB sample is modified, to reach a luminance of 1 cd/m$^2$, by:

$$\begin{cases} R_{HDR} = L \times R_{SDR} \\ G_{HDR} = L \times G_{SDR} \\ B_{HDR} = L \times B_{SDR} \end{cases}$$

            1.2.2) an output value $YUV_{SDR}$ is computed from the HDR-to-SDR decomposition process with $\beta_0 = \beta_{test}$ from the scaled RGB$_{HDR}$ samples;
            1.2.3) an error in the CIE Lab color space is calculated between $YUV_{SDR}$ and $RGB_{HDR}$ and this error is added to the cummlative error value $err_{test}$;

    2) The final value $\beta_0[Y]$ corresponds to $\beta_{test}$ giving the lowest cumulated error value among all the cumulative error values.

According to an embodiment of the step 1.2.3, an error in the Lab is calculated between $YUV_{SDR}$ and $RGB_{HDR}$ as follows:

- Convert *RGB_hdr* to *XYZ_hdr* (container gamut)
- Generate reference *Yref_hdr* for HDR

    ◦ *Yref_hdr = Y_hdr*
    ◦ *Yref_hdr* is reduced to resaturate more the perceived color and avoid chroma overshooting - this is controled by an input parameter saturation_skew (typically set to around 5 nits)

        ▪ If *Yref_hdr > saturation_skew*

$$Yref\_hdr = Yref\_hdr \times \left(\frac{Yref\_hdr}{saturation\_skew}\right)^{ga} \quad with \quad ga =$$

$$\frac{log\left(\frac{P}{100*saturation\_skew}\right)}{log\left(\frac{P}{saturation\_skew}\right)}$$

- *XYZ_hdr* divided by *Yref_hdr* (normalization), then conversion to *ab_hdr*

  ◦ *a_hdr* = 500 $\times$ (f(*X_hdr*) - f(*Y_hdr*))
  ◦ *b_hdr* = 200 $\times$ (f(*Y_hdr*) - f(*Z_hdr*))

- Convert *RGB_sdr* to *XYZ_sdr* (container gamut)
- *XYZ_sdr* divided by *Yref_sdr* = *Y_sdr* (normalization), then conversion to *ab_sdr*

  ◦ *a_sdr* = 500 $\times$ (f(*X_sdr*) - f(*Y_sdr*))
  ◦ b_sdr = 200 $\times$ (f(*Y_sdr*) - f(*Z_sdr*))

- *error* = (*a_hdr-a_sdr*)$^2$ + (*b_hdr - b_sdr*)$^2$

Figure 13 illustrates an embodiment of the method for computing a satskew value for a HDR picture.
The HDR picture is analyzed and hue and saturation histograms are computed for the HDR picture. Then a pre-analysis of such histograms is used to determine the satskew parameter as follows. The higher the saturation is, the more the satskew value will increase. The satskew parameter is then used to select a post-processing colour correction function $b_{p\_det}$ among the post-processing colour correction function set $b_p^{set}$.
The satskew parameter value is determined using histograms based on the HDR picture characteristics (saturation, hue, luma). The algorithm is summarized by the following:

- Computation of the histogram saturation and mean luminance on the HDR picture (linear);
- Computation, on the 5% most saturated pixels of the image, of the hue values;
- Computation, on the 10% most saturated pixels of the image, of the hue values;
- Computation, on the 20% most saturated pixels of the image, of the hue values; and
- Determination of the satskew value using metrics.

The saturation and hue are computed in the sRGB domain in order to make it easier to separate the different colors.

$$\begin{cases} R' = sRGB(R) \\ G' = sRGB(G) \\ B' = sRGB(B) \end{cases}$$

Where the sRGB function is:

$$if(v < 0.0031308)\, sRGB(v) = \max(0, v * 12.92),$$

$$else\, sRGB(v) = 1.055 * v^{\frac{1}{2.4}} - 0.055$$

*Computation of the saturation histogram and metrics*

We define maxRGB as *maxRGB* = max[*R',B',G'*] and minRGB as min*RGB* = min[*R',B',G'*]
The saturation S is computed by:

$$\begin{cases} if(maxRGB > 0.01)\, S = \frac{maxRGB - minRGB}{maxRGB} \\ \quad\quad else\, maxRGB = 0 \end{cases}$$

By definition, the saturation is included in[0;1]. The histogram is computed on all the picture and consists in 101 bins of witdth 0.01 for example.

From the highest to the lowest saturations, we sum the histogram bin size until we get 5%, 10% and 20% of the image size. This allows us to define $S_{5P}, S_{10P}, S_{20P}$ as the sets of pixels that are the 5%, 10% and 20% percent most saturated pixels of the image. These pixels can be characterized by saturation, hue and luminance metrics.

The average saturation values $\overline{S_{5P}}, \overline{S_{10P}}, \overline{S_{20P}}$ are computed on these three sets.

*Computation of the luminance metrics*

The luminance is averaged on $S_{5P}, S_{10P}, S_{20P}$ to get the $meanL_{5P}, meanL_{10P}, meanL_{20P}$ metrics.

The luminance is computed by

$$L = M_1 R + M_2 G + M_3 B$$

Where, in a 709 container:

$$M_1 = 0.2126$$

$$M_2 = 0.7152$$

$$M_3 = 0.0722$$

And in a 2020 container:

$$M_1 = 0.2627$$

$$M_2 = 0.6780$$

$$M_3 = 0.0593$$

The mean luminance is computed on the complete image.

*Computation of the hue histograms and metrics*

The algorithm needs to determine the main color of the most saturated pixels. Therefore, while computing the saturation histogram, hue histograms are also computed.

The hue values represent color through angles. The red colors are around 0°, the green colors are around 120° and the blue colors are around 240°.

The hue value is determination is the following:

$$\begin{cases} if(maxRGB - minRGB < 0.0001), hue = undefined \\ if(\text{max}RGB) = R'), hue_R = \left( \left[ \frac{G'-B'}{maxRGB-minRGB} \right] * 60 \right) \% 360 \\ if(\text{max}RGB) = G'), hue_G = \left( \left[ \frac{B'-R'}{maxRGB-minRGB} + 2 \right] * 60 \right) \% 360 \\ if(\text{max}RGB) = B'), hue_B = \left( \left[ \frac{R'-G'}{maxRGB-minRGB} + 4 \right] * 60 \right) \% 360 \end{cases}$$

Hence three histograms are computed (hue_hist_R for the red colors which contains the $hue_R$ values, hue_hist_G for the green colors which contains the $hue_G$ values and hue_hist_B for the blue colors whiche contains the

$hue_E$ values). Only the defined hue values are considered in the rest of the algorithm.

The hue histograms are indexed by saturation values and consists also in 101 bins of width 0.01. From the $S_{5P}, S_{10P}, S_{20P}$ are derived the sets :

- $H_{R5P}, H_{R10P} H_{R20P}$ from the hue_hist_R histogram
- $H_{G5P}, H_{G10P} H_{G20P}$ from the hue_hist_G histogram
- $H_{B5P}, H_{B10P} H_{B20P}$ from the hue_hist_B histogram

Mean hues values are computed on the previous nine sets. The mean hue value of $hi, i_{=1:n}$ hue values is averaged by the following:

$$\overline{hue} = atan \left( \frac{\sum_{i=1}^{n} sin(h_i)}{\sum_{i=1}^{n} cos(h_i)} \right)$$

The mean hue values are computed for the hue_hist_R, hue_hist_G, hue_hist_B histograms.

Therefore we have 9 metrics:

$$\overline{hue}_{R\_S\_5P}, \overline{hue}_{R\_S\_10P}, \overline{hue}_{R\_S\_20P}$$

$$\overline{hue}_{B\_S\_5P}, \overline{hue}_{B\_S\_10P}, \overline{hue}_{B\_S\_20P}$$

$$\overline{hue}_{G\_S\_5P}, \overline{hue}_{G\_S\_10P}, \overline{hue}_{G\_S\_20P}$$

In addition we also compute the color ratios:

$$ratio_{R5P} = \frac{size(H_{R5P})}{size(H_{R5P}) + size(H_{G5P}) + size(H_{B5P})}$$

$$ratio_{R10P} = \frac{size(H_{R10P})}{size(H_{R10P}) + size(H_{G10P}) + size(H_{B10P})}$$

$$ratio_{R20P} = \frac{size(H_{R20P})}{size(H_{R20P}) + size(H_{G20P}) + size(H_{B20P})}$$

$$ratio_{G5P} = \frac{size(H_{G5P})}{size(H_{R5P}) + size(H_{G5P}) + size(H_{B5P})}$$

$$ratio_{G10P} = \frac{size(H_{G10P})}{size(H_{R10P}) + size(H_{G10P}) + size(H_{B10P})}$$

$$ratio_{G20P} = \frac{size(H_{G20P})}{size(H_{R20P}) + size(H_{G20P}) + size(H_{B20P})}$$

$$ratio_{B5P} = \frac{size(H_{B5P})}{size(H_{R5P}) + size(H_{G5P}) + size(H_{B5P})}$$

$$ratio_{B10P} = \frac{size(H_{B10P})}{size(H_{R10P}) + size(H_{G10P}) + size(H_{B10P})}$$

$$ratio_{B20P} = \frac{size(H_{B20P})}{size(H_{R20P}) + size(H_{G20P}) + size(H_{B20P})}$$

_Determination of the satskew value from metrics_

The algorithm is based on the comparison of the previous metrics with some thresholds. An example for three satskew values (5, 10 and 15) is proposed.

We define the thresholds used for a ten satskew value by:

threshold_sat10_at_5p = 0.95
threshold_sat10_at_10p = 0.9
threshold_sat10_at_20p = 0.8

The thresholds used for a fifteen satskew value by:

threshold_sat15_at_5p = 0.99
threshold_sat15_at_10p = 0.9
threshold_sat15_at_20p = 0.9

The saturation loss is expressed by:

threshold_20p_10p = 0.8

In case of images where red represent a large part of saturated pixels, the thresholds are changed

$$if(ratio_{R20P} > 0.5)\ then$$

threshold_sat10_at_5p = 0.95

threshold_sat10_at_10p = 0.9

threshold_sat10_at_20p = 0.8

threshold_sat15_at_5p = 0.95

threshold_sat15_at_10p = 0.9

threshold_sat15_at_20p = 0.8

threshold_20p_10p = 0.8

The satskew value, or equivalently, an index k, is the derived according to the following steps.

$$if \left( \left( \overline{hue_{R_{S_{20P}}}} < 8 \right) \&\& \left( \overline{hue_{R_{S_{20P}}}} > -8 \right) \right) \quad pure\_red\_color = true$$

$$((\overline{S_{5P}} > \text{threshold\_sat15\_at\_5p})\&\&(\frac{size(S_{10P})}{size(S_{20P})} > \text{threshold\_20p\_10p})\&\&(\text{pure\_red\_color}) \&\&$$

$$(ratio_{R20P} > ratio_{B20P}))$$

satskew = 15; or equivalently k=2;

else

satskew = 10; or equivalently k=1;

If (mean luma on the image < 5) and $(\overline{S_{20P}} < 0.6)$

Or (mean luma on the image < 10) and $(ratio_{B20P} > 0.7)$

Or (mean luma on the image < 20) and $(ratio_{B20P} > 0.8)$

Or (mean luma on the image < 30) and $(ratio_{B20P} > 0.9))$

satskew is decreased to 5; or equivalently k is decreased by 1;

**2 - Decoding an HDR picture from a coded bitstream:**

Figure 8 illustrates a block diagram of an exemplary method for **decoding an HDR picture** from a coded bitstream according to an embodiment of the present principle. According this embodiment, the coded bitstream has been obtained according to the coding method as described with figure 7.

In a step E9, an SDR picture is decoded from said coded bitstream. For example, when the coded bitstream is conformant with an HEVC Main 10 profile, the coded bitstream is decoded according to the corresponding decoding process.

In step E9, HDR parameters are also decoded from the coded bitstream. THe HDR parameters may comprise at least: luma mapping parameters allowing to derive a LUT for mapping SDR luma to HDR luma, **reconstruction parameters** such as the v, a, and b parameters used to derive luma values from the decoded luma samples of the SDR picture.

In a step E14, the LUT invLUT for mapping luma values to luminance values is derived from the luma mapping parameters.

According to the present embodiment, in a step E10, **an index representative** of a predetermined post-processing colour correction function $b_{p\_det}$ among a set of predetermined post-processing colour correction functions $b_p^{set}$ **is decoded.**

According to one variant, the set of predetermined post-processing colour correction functions $b_p^{set}$ is predefined at the decoder.

In a step E12, the post-processing colour correction function $b_{p\_det}$ is **selected** according to the decoded index idx.

In a step E13, the HDR picture is then reconstructed from the decoded SRD picture and using the selected post-processing colour correction function $b_{p\_det}$. Such reconstruction step E13 is performed similarly as the reconstruction process described in figure 4.

According to another variant, in a step E11, the set of predetermined post-processing colour correction functions $b_p^{set}$ is decoded from the coded bitstream.

Figure 9 illustrates a block diagram of an exemplary method for decoding an HDR picture from a coded bitstream according to another embodiment of the present principle. According this embodiment, the coded bitstream has been obtained according to the coding method as described with figure 5.

According to this embodiment, the coded bitstream comprises a set of pivot points representative of an adjustment function $f_{adj}$ used to adjust a post-processing colour correction function $b_{p\_default}$ known at the decoder.

In step E9, the SDR picture and HDR parameters are decoded from the coded bitstream.

In step E14, the LUT invLUT for mapping luma values of SDR picture to luminance values of HDR picture is derived from the luma mapping parameters.

According to the present embodiment, in step E10, the pivot points representative of the adjustment function $f_{adj}$ are decoded.

In step E12, a post-processing colour correction function $b_{p\_dec}$ is built from the adjustment function $f_{adj}$ and a predetermined post-processing colour correction function $b_{p\_default}$.

According to this embodiment, the post-processing colour correction function $b_{p\_default}$ is selected among a set of predetermined post-processing colour correction functions $b_{p\_default}^{set}$ wherein the post-processing colour correction function (LUT) are predefined at the decoder. For instance, one LUT is defined for each triple (container colour gamut, content colour gamut, peak luminance). The post-processing colour correction function $b_{p\_default}$ is identified according to the content characteristics parameters coded at the picture or sequence level in the coded bitstream.

The post-processing colour correction function $b_{p\_dec}$ is then built according to equation (eq. 2).

In step E13, the HDR picture is then reconstructed from the decoded SRD picture and using the adjusted post-processing colour correction function $b_{p\_dec}$. Such reconstruction step E13 is performed similarly as the reconstruction process described in figure 4.

On figures 1 to 9, 12 and 13 the method steps are performed by modules, which are functional units, such modules may or not be in relation with distinguishable physical units. For example, these modules or some of them may be brought together in a unique component or circuit, or contribute to functionalities of a *software. A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

Figure 11 represents an exemplary architecture of a device 110 which may be configured to implement a method described in relation with figures 1-9.

Device 110 comprises following elements that are linked together by a data and address bus 111:

- a microprocessor 112 (or CPU), which is, for example, a DSP (or Digital Signal Processor);
- a ROM (or Read Only Memory) 113;
- a RAM (or Random Access Memory) 114;
- an I/O interface 115 for transmission and/or reception of data, from an application; and
- a battery 116.

According to a variant, the battery 116 is external to the device. Each of these elements of figure 10 are well-known by those skilled in the art and won't be disclosed further. In each of mentioned memory, the word « register » used in the specification can correspond to area of small capacity (some bits) or to very large area (e.g. a whole program or large amount of received or decoded data). ROM 113 comprises at least a program and parameters. Algorithm of the methods according to the disclosure is stored in the ROM 113. When switched on, the CPU 112 uploads the program in the RAM and executes the corresponding instructions.

RAM 114 comprises, in a register, the program executed by the CPU 112 and uploaded after switch on of the device 110, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the HDR color picture is obtained from a source. For example, the source belongs to a set comprising:

- a local memory (113 or 114), e.g. a video memory or a RAM (or Random Access Memory), a flash memory, a ROM (or Read Only Memory), a hard disk;
- a storage interface, e.g. an interface with a mass storage, a RAM, a flash memory, a ROM, an optical disc or a magnetic support;
- a communication interface (115), e.g. a wireline interface (for example a bus interface, a wide area network interface, a local area network interface) or a wireless interface (such as a IEEE 802.11 interface or a Bluetooth® interface); and

- a picture capturing circuit (e.g. a sensor such as, for example, a CCD (or Charge-Coupled Device) or CMOS (or Complementary Metal-Oxide-Semiconductor)).

According to different embodiments of the decoding or decoder, the HDR decoded picture is sent to a destination; specifically, the destination belongs to a set comprising:

- a local memory (113 or 114), e.g. a video memory or a RAM (or Random Access Memory), a flash memory, a ROM (or Read Only Memory), a hard disk;
- a storage interface, e.g. an interface with a mass storage, a RAM, a flash memory, a ROM, an optical disc or a magnetic support;
- a communication interface (115), e.g. a wireline interface (for example a bus interface, a wide area network interface, a local area network interface) or a wireless interface (such as a IEEE 802.11 interface or a Bluetooth® interface); and
- a display.

According to different embodiments of encoding or encoder, the coded bitstream is sent to a destination. As an example, the coded bitstream is stored in a local or remote memory, e.g. a video memory (114) or a RAM (114), a hard disk (113). In a variant, the bitstream is sent to a storage interface, e.g. an interface with a mass storage, a flash memory, ROM, an optical disc or a magnetic support and/or transmitted over a communication interface (115), e.g. an interface to a point to point link, a communication bus, a point to multipoint link or a broadcast network.

According to different embodiments of decoding or decoder, the bitstream is obtained from a source. Exemplarily, the bitstream is read from a local memory, e.g. a video memory (114), a RAM (114), a ROM (113), a flash memory (113) or a hard disk (113). In a variant, the bitstream is received from a storage interface, e.g. an interface with a mass storage, a RAM, a ROM, a flash memory, an optical disc or a magnetic support and/or received from a communication interface (115), e.g. an interface to a point to point link, a bus, a point to multipoint link or a broadcast network.

According to different embodiments, device 110 being configured to implement an encoding method described in relation with figure 1, 5 or 7, belongs to a set comprising:

- a mobile device;
- a communication device;
- a game device;
- a tablet (or tablet computer);
- a laptop;
- a still picture camera;
- a video camera;
- an encoding chip;
- a still picture server; and
- a video server (e.g. a broadcast server, a video-on-demand server or a web server).

According to different embodiments, device 110 being configured to implement a decoding method described in relation with figure 2, 8 or 9, belongs to a set comprising:

- a mobile device;
- a communication device;
- a game device;
- a set top box;
- a TV set;
- a tablet (or tablet computer);
- a laptop;
- a display; and
- a decoding chip.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for coding at least one high dynamic range picture into a coded bitstream, said method comprising:

   - selecting (E1) a first predetermined post-processing colour correction function $b_{p\_det}$ among a first set of predetermined post-processing colour correction functions $b_p^{set}$, according to at least one parameter computed from said at least one high dynamic range picture,
   - determining (E2) a pre-processing colour correction function $b_0$ from said selected first predetermined post-processing colour correction function $b_{p\_det}$,
   - decomposing (E3) said high dynamic range picture into a standard dynamic range picture, using said pre-processing colour correction function $b_0$,
   - selecting (E6) a second predetermined post-processing colour correction function $b_{p\_default}$ among a second set of predetermined post-processing colour correction functions $b^{set}_{p\_default}$ which are known to a decoder, according to characteristics of said high dynamic range picture,
   - determining (E7) an adjustment function $f_{adj}$ used to adjust said selected predetermined colour correction function $b_{p\_default}$ into a third post-processing colour correction function $b_{p\_dec}$ and defined such that said third post-processing colour correction function $b_{p\_dec}$ maps as much as possible the selected second predetermined colour correction function $b_{P\_default}$ to the selected first predetermined post-processing colour correction function $b_{p\_det}$ by minimizing their difference $|b_{p\_det} - b_{p\_dec}|$,
   - coding (E4, E5) into said coded bitstream said standard dynamic range picture, said characteristics of the high dynamic range picture, and said adjustment function $f_{adj}$.

2. The method for coding according to claim 1, wherein said at least one parameter computed from said at least one high dynamic range picture is a saturation skew parameter.

3.  The method for coding at least one high dynamic range picture into a coded bitstream according to claim 1 or 2, wherein said adjustment function $f_{adj}$ is modeled using a set of pivot points representative of said adjustment function $f_{adj}$, and wherein, for the coding of said adjustment function $f_{adj}$, only said set of pivot points are coded.

4.  A method for decoding at least one high dynamic range picture from a coded bitstream, wherein said method comprises:

    - decoding (E9, E10) from said coded bitstream a standard dynamic range picture from said coded bitstream and a set of pivot points representative of an adjustment function $f_{adj}$,
    - building a post-processing colour correction function $b_{p\_dec}$ from said adjustment function $f_{adj}$ and from a predetermined post-processing colour correction function $b_{p\_default}$,
    - reconstructing (E13) said high dynamic range picture from said decoded standard dynamic range picture and said built post-processing colour correction function $b_{p\_dec}$.

5.  The method for decoding at least one high dynamic range picture from a coded bitstream according to claim 4, wherein said method further comprises:

    - selecting said predetermined post-processing colour correction function $b_{p\_default}$ among a set of predetermined post-processing colour correction function $b^{set}_{p\_default}$, according to content characteristics parameters coded at the picture in the coded bitstream.

6.  A method for coding at least one high dynamic range picture into a coded bitstream, said method comprising:

    - selecting (E1) a predetermined post-processing colour correction function $b_{p\_det}$ among a set of predetermined post-processing colour correction functions $b_p^{set}$, according to at least one parameter computed from said at least one high dynamic range picture,
    - determining (E2) a pre-processing colour correction function $b_0$ from said selected predetermined post-processing colour correction function $b_{p\_det}$,
    - decomposing (E3) said high dynamic range picture into a standard dynamic range picture, using said pre-processing colour correction function $b_0$,
    - coding (E4, E5) into said coded bitstream said standard dynamic range picture and the at least one parameter representative of the selected predetermined post-processing colour correction function $b_{p\_det}$.

7.  The method for coding according to claim 6, wherein said at least one parameter computed from said at least one high dynamic range picture is a saturation skew parameter.

8.  A method for decoding at least one high dynamic range picture from a coded bitstream, said method comprising:

    - decoding (E9, E10) from said coded bitstream a standard dynamic range picture from said coded bitstream and at least one parameter representative of a predetermined post-processing colour correction function $b_{p\_det}$
    - reconstructing (E13) said high dynamic range picture from said decoded standard dynamic range picture and said predetermined post-processing colour correction function $b_{p\_det}$.

9.  The method for decoding according to claim 8, wherein said at least one parameter is a saturation skew parameter.

10. The method for decoding at least one high dynamic range picture from a coded bitstream according to claim 8 or 9, further comprising:

    - selecting said predetermined post-processing colour correction function $b_{p\_det}$ among a set of predetermined post-processing colour correction functions $b_p^{set}$, according to said at least one decoded parameter.

11. An apparatus for coding at least one high dynamic range picture into a coded bitstream, comprising at least one processor configured for implementing the method for coding according to any one of claims 1 to 3.

12. An apparatus for decoding at least one high dynamic range picture from a coded bitstream, comprising at least one processor configured for implementing the method for decoding according to any one of claims 4 and 5.

**13.** An apparatus for coding at least one high dynamic range picture into a coded bitstream, comprising at least one processor configured for implementing the method for coding according to any one of claims 6 to 7.

**14.** An apparatus for decoding at least one high dynamic range picture from a coded bitstream, comprising at least one processor configured for implementing the method for decoding according to any one of claims 8 to 10.

**15.** A computer program comprising software code instructions for performing the method according to any one of claims 1 to 10, when the computer program is executed by a processor.

**16.** Electronic device incorporating the apparatus for coding according to any one of claims 11 and 13, or incorporating the apparatus for coding according to any one of claims 12 and 14.

**17.** Electronic device according to claim 16, selected from the group consisting of a mobile device, a communication device, a game device, a tablet, a laptop, a still picture camera, a video camera, a set top box, a TV set, a display, a coding or encoding chip, a still picture server and a video server.

HDR picture → HDR to SDR decomposition

SDR picture → Encoding → coded bistream

HDR parameters →

**FIG.1**

Decoding

decoded SDR picture → SDR output

decoded SDR picture → SDR to HDR reconstruction → HDR output

HDR parameters →

**FIG.2**

HDR picture → E30 → LUT$_{TM}$

E30 → E31

E31 → E32

E32 → E33

E33 → E34 → SDR picture

## FIG.3

decoded SDR picture → E40

E40 → E41

HDR parameters → E41

E41 → E42

HDR parameters → E42

E42 → E43

E43 → E44

invLUT → E44 → Reconstructed HDR picture

## FIG.4

E60 → E61

## FIG.6

FIG.5

FIG.7

Luma mapping params

E14

coded
bistream

E9

decoded SDR
picture

E10

idx

E11

$b_p^{set}$

E12

$b_{p\_det}$

E13

HDR
picture

FIG.8

Luma mapping params

E14

coded
bistream

E9

decoded SDR
picture

E10

$f_{adj}$

$b_{p\_default}$

E12

$b_{p\_dec}$

E13

HDR
picture

FIG.9

FIG.10

FIG.11

**Generation β0[ Y ]**

Loop over Y (and corresponding L)

For each Y/L

Loop over β

For each β

Loop over RGB samples

For each RGB

Scale RGB by luminance L

RGB_hdr

Prime pre-proc using β

YUV_sdr

Compute ab error HDR vs SDR in Lab space

Comulate error over RGB samples

β0[ Y ] = β with minimal cumulative error

# FIG.12

```
┌─────────────┐   ┌─────────────┐   ┌─────────────┐   ┌─────────────┐   ┌─────────────┐
│ Convert RGB_hdr│  │ Derive reference│ │ Rescale refY_hdr│ │ Normalize    │  │ Convert to Lab to│
│ to XYZ_hdr    │→ │ luminance HDR   │→│ to limit color  │→│ XYZ_hdr by   │→ │ get ab_hdr     │
│               │   │ refY_hdr        │  │ desaturation    │  │ refY_hdr      │  │                │
└─────────────┘   └─────────────┘   └─────────────┘   └─────────────┘   └─────────────┘
                                                                                        │
                                                                                        ▼
                                                                              ┌─────────────┐
                                                                              │ Compute error   │
                                                                              │ ab_hdr vs ab_sdr│
                                                                              └─────────────┘
                                                                                        ▲
┌─────────────┐   ┌─────────────┐                   ┌─────────────┐   ┌─────────────┐  │
│ Convert RGB_sdr│  │ Derive reference│               │ Normalize    │  │ Convert to Lab to│
│ to XYZ_sdr    │→ │ luminance SDR   │──────────────→│ XYZ_sdr by   │→ │ get ab_sdr     │
│               │   │ refY_sdr        │               │ refY_sdr      │  │                │
└─────────────┘   └─────────────┘                   └─────────────┘   └─────────────┘
```

FIG.13

Europäisches
Patentamt

European
Patent Office

Office européen
des brevets

**EUROPEAN SEARCH REPORT**

Application Number

EP 17 16 7965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/180854 A1 (KONINKL PHILIPS NV [NL]) 3 December 2015 (2015-12-03) * abstract; page 7, line 5 - page 8, line 10; page 9 line 24 - page 11 line 26 * ----- | 1-17 | INV. H04N19/30 H04N19/117 H04N19/186 H04N19/85 |
| X | SEGALL A ET AL: "Tone mapping SEI", 19. JVT MEETING; 31-03-2006 - 07-04-2006; GENEVA, CH; (JOINT VIDEOTEAM OF ISO/IEC JTC1/SC29/WG11 AND ITU-T SG.16 ),, no. JVT-S087, 1 April 2006 (2006-04-01), XP030006466, ISSN: 0000-0409 * section "Background"; section "Proposed SEI message", section A.1.1 Dynamic range SEI message syntax * ----- | 1-17 | |
| X | US 8 514 934 B2 (WARD GREGORY JOHN [US] ET AL) 20 August 2013 (2013-08-20) * abstract; column 5 lines 22 - 50 * ----- | 1-17 | |
| A | JEROEN STESSEN ET AL: "Chromaticity based color signals", 109. MPEG MEETING; 7-7-2014 - 11-7-2014; SAPPORO; (MOTION PICTURE EXPERT GROUP OR ISO/IEC JTC1/SC29/WG11),, no. m34335, 3 July 2014 (2014-07-03), XP030062708, * the whole document * ----- | 1-17 | TECHNICAL FIELDS SEARCHED (IPC) H04N G06T G09G |

The present search report has been drawn up for all claims

| Place of search | Date of completion of the search | Examiner |
|---|---|---|
| Munich | 8 September 2017 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 7965

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2017

| Patent document cited in search report | | | Publication date | Patent family member(s) | | | Publication date |
|---|---|---|---|---|---|---|---|
| WO 2015180854 | A1 | | 03-12-2015 | CN | 106464892 | A | 22-02-2017 |
| | | | | EP | 3149944 | A1 | 05-04-2017 |
| | | | | JP | 2017523621 | A | 17-08-2017 |
| | | | | US | 2017078706 | A1 | 16-03-2017 |
| | | | | WO | 2015180854 | A1 | 03-12-2015 |
| US 8514934 | B2 | | 20-08-2013 | CA | 2563523 | A1 | 03-11-2005 |
| | | | | CN | 1954344 | A | 25-04-2007 |
| | | | | CN | 101902637 | A | 01-12-2010 |
| | | | | DK | 2375383 | T3 | 15-08-2016 |
| | | | | EP | 1743301 | A1 | 17-01-2007 |
| | | | | EP | 2375383 | A2 | 12-10-2011 |
| | | | | ES | 2397341 | T3 | 06-03-2013 |
| | | | | HK | 1150679 | A1 | 25-04-2014 |
| | | | | JP | 5086067 | B2 | 28-11-2012 |
| | | | | JP | 5180344 | B2 | 10-04-2013 |
| | | | | JP | 2007534238 | A | 22-11-2007 |
| | | | | JP | 2011193511 | A | 29-09-2011 |
| | | | | KR | 20070026525 | A | 08-03-2007 |
| | | | | US | 2008192819 | A1 | 14-08-2008 |
| | | | | US | 2008310501 | A1 | 18-12-2008 |
| | | | | US | 2012230597 | A1 | 13-09-2012 |
| | | | | US | 2015003537 | A1 | 01-01-2015 |
| | | | | US | 2016345031 | A1 | 24-11-2016 |
| | | | | WO | 2005104035 | A1 | 03-11-2005 |

EPO FORM P0459

For more details about this annex : see Official Journal of the European Patent Office, No. 12/82